# EUROPEAN PATENT SPECIFICATION

(11) **EP 1 815 741 B1**
(45) Date of publication and mention of the grant of the patent: **06.07.2011**
(21) Application number: 06100589.8
(22) Date of filing: 19.01.2006
(51) Int. Cl.: A01N 1/02

(54) **Use of n-piperidine derivative compositions for protecting biological systems**
Verwendung von N-Piperidinderivathaltigen Zusammensetzungen zum Schutz biologischer Systeme
L'utilisation de compositions contenants des dérivés des pipéridine pour protéger des systèmes biologiques

(43) Date of publication of application: 08.08.2007
(73) Proprietor: Medestea Research & Production S.p.A., 10010 Colleretto Giacosa (Torino) (IT)
(72) Inventor: Merizzi, Gianfranco, 10128, Torino (IT); Soleti, Antonio, 10042, Nichelino (Torino) (IT)
(74) Representative: Rambelli, Paolo

(56) References cited:
- WO-A-88/05044
- WO-A-96/15110
- WO-A-2005/084677
- US-A- 5 498 427
- NELSON S K ET AL: "Oxidative stress in organ preservation: a multifaceted approach to cardioplegia" BIOMEDICINE AND PHARMACOTHERAPY, ELSEVIER, PARIS, FR, vol. 59, no. 4, May 2005 (2005-05), pages 149-157, XP004866969 ISSN: 0753-3322

## Description

The present invention relates to compositions and the use of such compositions in the formulation of preservation solutions for protecting mammalian (including human) biological systems such as biotechnological preparations (including recombinant proteins), organs, tissues (including whole blood and blood derivatives such platelets and plasma) and cells (including red blood cells, pancreatic β-cells, stem cells and germ cells) from oxidative damage occurring, from example, during the different phases of transplantation and surgery. More particularly, this invention relates to a method for protecting and/or enhancing viability of mammalian biotechnological preparations/cells/tissues/organs during isolation (or harvesting), preservation (or storage), expansion (or colture), transplantation and surgery by using compositions containing effective amount of antioxidant cyclic (bis)-hydroxylamines derived from N-piperidine.

The generation of highly reactive free radicals - the superoxide anion (O₂^{·-} ), the perhydroxyl radical (HO₂^{·-}), the oxygen singleton (^{1A}O₂), the hydroxyl radical (HO^{·}), hydrogen peroxide (H₂O₂), nitrogen dioxide (NO₂), peroxynitrite (NOO^{·}) and other (R^{·}) radicals (alkyl - L^{·} , alkoxy-LO^{·} , peroxy-LOO^{·} radicals, etc. has a detrimental effect on the viability of biological systems such as biotechnological preparations (including recombinant proteins), organs, tissues (including whole blood derivatives such as platelets and plasma) or cells (including red blood cells, pancreatic β-cells, stem cells and germ cells) during isolation, preservation (or storage), expansion (or colture), transplantation or organ (e.g. cardiopulmonary) bypass surgery (see, for example, Bottino R., Diabetes 53, 2559-2567, 2004).

It is known, for example, that successful organ transplantation is often limited due to ischemic/reperfusion injury: the failure originates from the risks of degradations, or even necrosis, of the graft, which manifest themselves during the reoxygenation of the transplanted organ and which are associated to the ischemia, usually prolonged, occurring between initiation of the transplantation itself from the donor and the completion of the implantation in the recipient. Minimizing the morbidity and mortality associated with graft tissue damage during ischemia and reperfusion injury is thus of enormous clinical relevance (see, for example, Tsuchihashi S.I. et al., Curr. Opin. Organ Transplant. 9, 145-152, 2004).

An ischemia of five to six hours due to "heat ischemia", occurring during the removal from the donor, "cold ischemia", following the hypothermic storage phase (universally accepted as the basic strategy for the maintenance and transport of organs for transplantation), and "global ischemia", occurring during implantation, constitutes (for example, in the case of heart) the upper tolerable limit, and does not rule out a large number of accidents. Of course, other organs/tissues such as liver, skin/muscle flap, trachea, amputated digits, pancreas, kidney, lung, intestine or cells (e.g. pancreatic islet cells), are subject to oxidative damage when removed from the host prior to (or during) culture, expansion and transplantation. In the latter case, during the reperfusion of the organ in the recipient, free oxygen radicals are actually produced in copious amount (see for example Vega D.J. et al., Am. Thorac.Surg. 71, 1442-1447, 2001).

To overcome the limit, many different organ preservation solutions have been designed, as investigators have sought to lengthen the time that an organ may remain extra-corporeally, as well as to maximize the function of the organs/cells following implantation.

Examples of conventional preservation solutions are the following:
- Celsior solution, disclosed in Menosche P. et al., Eur. J. Cardiothoracic Surg. 8, 207-215, 1994;
- University of Wisconsin solution, disclosed in U.S. Patent No. 4,798,824;
- Collins solution, disclosed in Maurer E.J. et al., Tranplant. Proc. 22, 548-550, 1990;
- Euro-Collins solution, disclosed by Collins G.M. and Holsz N.A., Surgery 39, 432, 1976 & Eurotransplant Formation Annual Report, 1976;
- Columbia University solution, disclosed in U.S. Patent No. 5,552,267;
- Krebs-Henseleit solution, disclosed by Sharek H.J. et al., Pfluger's Arch. 354, 349-365, 1975;
- Stanfort solution, disclosed in Swanson D.K. et al., J. Heart Transpl. 7, 456, 467, 1988;
- Lactate Ringer's solution, also namely Hartmann's solution, disclosed in Dreikorn K. et al., Eur. Urol. 6, 221-224, 1980;
- S.Thomas II solution, disclosed by Jynge P. et al., Scand. J. Thorac. Cardiov. Surg. Suppl. 30, 1-28, 1981;
- CRMBM solution, disclosed in Bernard M. et al., J. Heart Lung Transplant 18, 572-581, 1999;
- LYPS solution, disclosed in Michel P. et al., J. Heart Lung Transplant 21, 1030-1039, 2002;
- ET-Kyoto solution, disclosed in Chen F. et al., Yonsei Med. J. 45, 1107-1114, 2004;
- CMU-1 solution, disclosed in Cheng Y. et al., World J. Gastroenterol. 11, 2522-2525, 2005;
- Polysol solution, disclosed in Bessems M. et al., Transpl. Proc. 37, 326-328, 2005.

To date, however, the above cited preservation solutions present only limited advantages in efficaciously fighting oxidative damage. This is due to the fact that the protective agents contained in the solutions, which are conventional substances (including antioxidants) capable of counteracting the production or the effects of reactive free radicals, such as trolox derivatives of vitamin E (Trolox C), allopurinol, desferoxamine, indanoindoles, catalase, peroxidase, superoxide dismutase, glutathione, N-acetylcysteine, nitroxides, ginkgolides, coenzyme Q, β-carotene, cyanidol (see, for example, WO88/05044, U.S. Patent No. 5 002 965; U.S. Patent No. 6 054 261; U.S. Patent No. 5 498 427; U.S. Patent No. 4 877 810; WO95/02323; WO02/102149) used alone or in combination (see for example Nelson S.K. et al., Biomedicine & Pharmacotherapy 59, 149-157, 2005), are not the best choice for the protection of biological systems against oxidative damage. The limited value of the cited compounds stems from the fact that, for example, antioxidant enzymes can act extracellularly and selectively toward one kind of radical only (e.g. superoxide dismutase toward superoxide anion O₂^{-·}) and organic compounds such as glutathione (the most widely used agent in preservation solutions) can actually behave as prooxidant (see for example Gnaiger E. et al., Transplantation Proc. 32, 14, 2000) or have no effects if removed from the solution (see for example Urushihara T., Transplantation 53, 750-754, 1992).

The need of the new refined preservation solutions, containing more effective additives toward ischemia and reperfusion injury, is indeed strongly evoked by the international scientific community (see, for example, Kupiec-Weglinski J.W., Curr. Op. Organ Transpl. 9, 130-131, 2004).

To solve these problems, the present invention provides a method for preserving and/or enhancing the viability ex vivo of a mammalian biological system and solutions for protecting biological systems as defined in the appended claims.

The method of the invention makes use of effective protective compositions containing antioxidant cyclic hydroxylamines derived form the N-piperidine. These very potent antioxidants over conventional ones (e.g. acting toward most, if not all, carbon, nitrogen and oxygen-centered radicals of biological interest including peroxyl, superoxide and peroxynitrite radicals), which now have been found useful for mammalian biological system preservation solutions in accordance with the present invention, are disclosed in U.S. Patent No. 5,981,548 and WO 2005/084677 as well as processes for their preparation.

The invention provides preservation/perfusion solutions for protecting against oxidative damage mammalian (including humans) biological systems such as biotechnological preparations (including recombinant proteins), organs, tissues (including tissue derivatives such as platelets and plasma) or cells (including stem cells, pancreatic islets, germ cells and red blood cells), during isolation (or harvesting), preservation (e.g. perfusion, storage), expansion (or colture), transplantation and surgery (e.g. cardiopulmonary bypass).

In the preservation solutions, the compound known as: bis (1-hydroxy-2,2,6,6-tetramethyl-4-piperidinyl)decandioate, having the formula 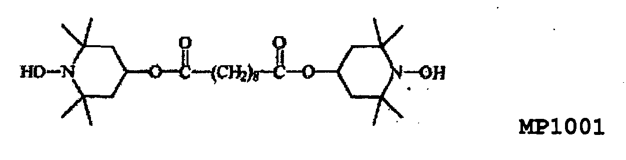 should be preferred and used preferably in the range of 0.001 to 50 mM, preferably in the form of a physiologically acceptable salt. Non limiting examples of these salts are chloride, fumarate and maleate. Chloride is the first choice.

The solutions for preservation of biological materials, according to the invention, comprise, in addition to the N-piperidine derivative of formula (I) or (III), one or more further antioxidants or protective agents, such as those listed hereinbefore.

The solutions of the invention are preferably substantially isotonic with the biological material to be preserved. As used herein an isotonic solution refers to a solution in which the cells neither swell nor shrink substantially. Preferably, the preservative solutions of the invention have an osmolality substantially equal to that of the biological material to be preserved. However, this is not a requirement of all the inventive solutions, since some solutions may include one or more components which raise the osmolality of the solution but are able to cross semi-permeable membranes freely, thus raising the osmotic pressure equally on both sides of the cell membranes. By way of example, the osmolality may range from about 270 to 450 mOsm/l.

Preferably the solutions of the invention comprise a physiological acceptable amount of ions, selected from the group consisting of sodium, potassium, calcium, magnesium, mono-and bi-acidic phosphate, bicarbonate, chloride ions and mixtures thereof. Typical amounts of potassium, sodium, magnesium, calcium and chloride ions are for instance shown in US 5 498 427 (cf. claim 6). The solution may further comprise a carbohydrate source, such as glucose and mannitol. The pH of the solution is typical between 7.4 and 8.5.

According to a preferred embodiment the compositions comprise desferoxamine preferably at the final concentration within the range of from 0.01 to 55 mM, Na⁺ preferably from 0.1 to 200 mM and K⁺, preferably from 0.2 to 220 mM. The determination of the optimal dosage is amongst the possible selections that are open to a person skilled in the art, and widely reported in literature.

Alternatively at least one N-piperidine derivative singularly or together with desferoxamine, or the combination of both K⁺ and Na⁺ ,if not originally present can be used as additive to commercially available preservation solutions.

Ingredient/s should be packaged in a manner such as is a common practice with this type of compounds, such as in ampoule under an inert atmosphere or in vacuum, so that the component/s is to be reconstituted in a suitable physiologically acceptable buffer, or directly into conventional preservation solutions, prior to use.

The composition of the invention is preferably for use in the preservation of biological systems or materials of human origin, but it can also be used for preservation of materials of animal origin, such as farm animals, cats, dogs, cattle, sheep and pigs.

The following example enables a person skilled in the art to carry out the invention. The example is therefore illustrative of this invention and is included solely as an embodiment of the invention and not as a limitation. The use of the invention in an animal model of organ (rabbit heart) preservation experiment, by way of example cold ischemia, is therefore described.

The example which follows, refers to the annexed drawings, wherein:
- figure 1 is a diagram showing the developed pressure expressed in mmHg after heart reperfusion (1 h) under equimolar antioxidant potency, GSH vs MP1001 **p<0. 01 (Wilcoxon's rank method);
- figure 2 is a diagram showing the expression of lipid peroxidation, carbonyl proteins and LDH levels in rabbit hearts after 1 h reperfusion under equimolar antioxidant potency GSH vs MP1001 **p<0. 01 (Wilcoxon's rank method); and
- figure 3 is a diagram showing the histological analysis of rabbit hearts after 1 h reperfusion under equimolar antioxidant potency GSH vs MP1001 **p<0. 01 (Wilcoxon's rank method) .

### Example

Reports conflict on the benefit of preservation solutions for cardiac graft preservation during hypothermia. Cold storage solutions can be classified into 2 types, extracellular and intracellular, based on K⁺ and Na⁺ concentrations. In other words, extracellular-type solutions mimic extracellular fluids - [Na⁺]≥70 mmol/L, [K⁺] = 5 ~ 30 mmol/L - and intracellular-type solutions mimic intracellular fluids- [Na⁺]<70 mmol/L, [K⁺] = 30 ~ 125 mmol/L. Recent comparative investigations on the most widely used solutions showed that extracellular-type solutions provided better preservation that did intracellular-type ones (see for example Michel P. et al., J. Heart & Lung Transpl. 21, 1030-1035, 2002). Among extracellular solutions, Celsior showed high efficacy for heart preservation. In addition, growing evidences from prospective multicenter randomized clinical trials support the use of Celsior preservation solution in multiple organ harvesting as a universal cold storage solution for intra-abdominal organs and for intrathoracic organs as well (see for example Faenza A. et al., Transplantation 72, 1274-1277, 2001).

For these reasons Celsior solution is becoming the gold standard solution worldwide and therefore selected as the most indicative for checking the efficacy of chemical compounds or compositions according to the present invention.

A brief discussion of a conventional technique for organ (heart) preservation follows, since the method disclosed herein is widely described in literature.

Male New Zealand rabbits (1.4-1.8 kg weight) were kept on a standard laboratory diet supplemented with "Nossan pellet" (both the animals and pellets are available from Nossan Company, Milan, Italy) and were housed for three weeks (relative humidity 50%±10%, temperature 22°C±1°C and in a light/darkness cycle of 12 hours/12 hours, with first light at 7.30 a.m.) prior to the experiments; food and water were available *ad libitum.*

The hearts were quickly excised from anesthetized animals (55 mg/kg body weight sodium pentobarbital; ten rabbits for each experiment group were used) flushed with the respective experimental solutions and placed in either cold (4°C) Celsior and Celsior plus 5mM MP1001 or Celsior plus GSH 5mM for 24 hours. Because Celsior standard solution contains 3 mM reduced glutathione (GSH), comparative experiments in term of "total antioxidant power" using equimolar antioxidant amount (e.g. adding 5 mM MP1001 or 5 mM GSH to Celsior) were performed.

At the end of cold preservation, the organs were then reperfused in a Langerdoff working heart model with oxygenated Krebs-Henseleit buffer (120 mM NaCl, 25 mM NaHCO₃, 4.9 mM KCl, 1.2 mM KH₂PO₄, 2.5 mM CaCl₂, 1.25 MgSO₄ and 10 mM glucose). The buffers were bubbled regularly with a mixture of O₂ (95%) and CO₂ (5%); the CO₂ helped maintain the buffer at a physiological pH (7.4). In the mean time, the apparatus had extensive water-jacketing connected to a water heater that maintained buffers and hearts at 37°C. The buffers was filtered through a Gelman GA-4, 0.8 µm metrical membrane before the use. A saline-filled latex balloon connected through a pressure transducer to a polygraph recorder was inserted into the left ventricle through a left atriotomy and secured by a suture to the mitrial annulus. The suture was loose enough to allow fluid drainage from the ventricle.

After 24 hours of cold preservation and reperfusion for 1 hour, the developed pressure (as a measure of protection) of the hearts preserved in Celsior (standard/control) was a mean of 34±9.55 mmHg. The organs could no longer convert and maintain a good sinus rhythm and contract efficiently. We determined that this level of recovery was not sufficient and proceeded to add the cardioprotective antioxidant MP1001 (5 mM) or GSH (5mM, to have a final, equimolar 8 mM "antioxidant concentration").

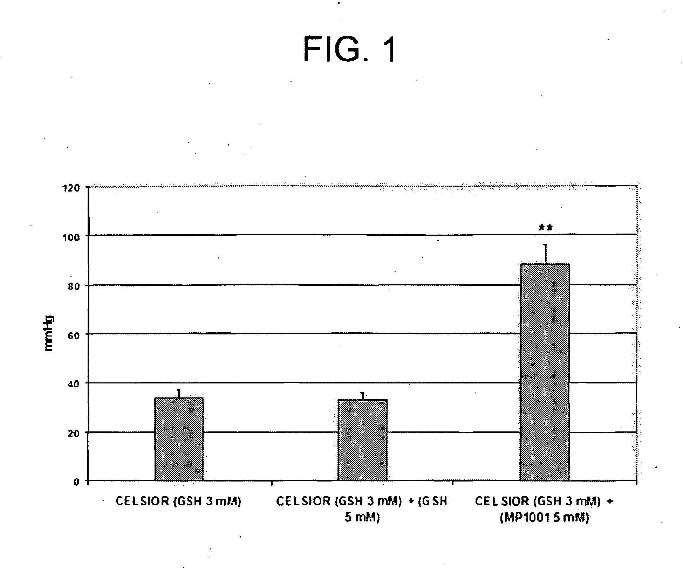

Figure 1 clearly shows that the antioxidant MP1001 when added to standard Celsior solution is able to provide a marked and significant (p<0.01) protection. When the hearts were preserved with this modified solution, cardioplegia for 24 hours and reperfused, the recovery as measured by developed pressure was 88±9.02 mmHg. On the contrary, the presence in Celsior of an equimolar (8 mM GSH) amount of the most used conventional antioxidant (reduced glutathione) did not provide any additional protection compared to standard solution (3 mM GSH) .

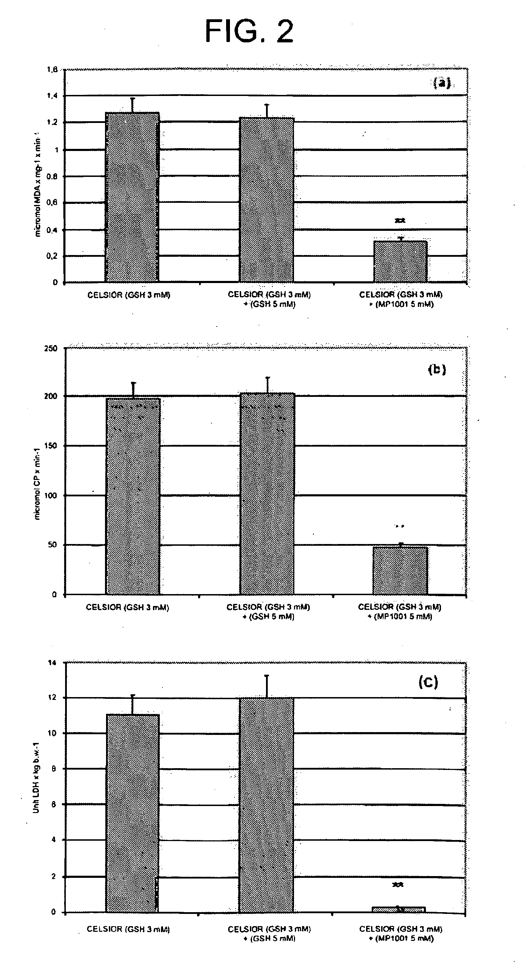

Lipid peroxidation was determined by quantification of the release of malondialdeyde (MDA) accumulated in cells which was used as biomarker, essentially according to Buege Y.A. & Aust S.G., Method Enzymol. 52, 302-310, 1978. Figure 2a clearly shows the high development of lipid peroxidation products in the presence of standard Celsior solution. The use of additional 5 mM GSH did not significantly modify this parameter. By contrast, the addition of MP1001 to Celsior preservation solution provoked a marked and significant (p<0.01) reduction of the lipid peroxidation (1.28±0.37 Celsior vs 0.31±0.10 Celsior + MP1001). Oxidative modification of proteins is a typical biomarker of reperfusion injury as a consequences of attack by free reactive radicals *(*Fundam. Clin. Pharmacol. 19, 491-496, 2005). Figure 2b shows the presence of a significant (p<0.01) and concomitant decrease in the levels of both peroxidation and carbonyl proteins determined by MP1001 (198±18 Celsior vs 48±11Celsior + MP1001). Again, LDA levels in the perfusate was significantly (p<0.01) reduced by MP1001 when compared to Celsior (Fig. 2c) (11±2.5 Celsior vs 0.3±0.1Celsior + MP1001). Both carbonyl proteins and LDA were not modified by GSH supplement.

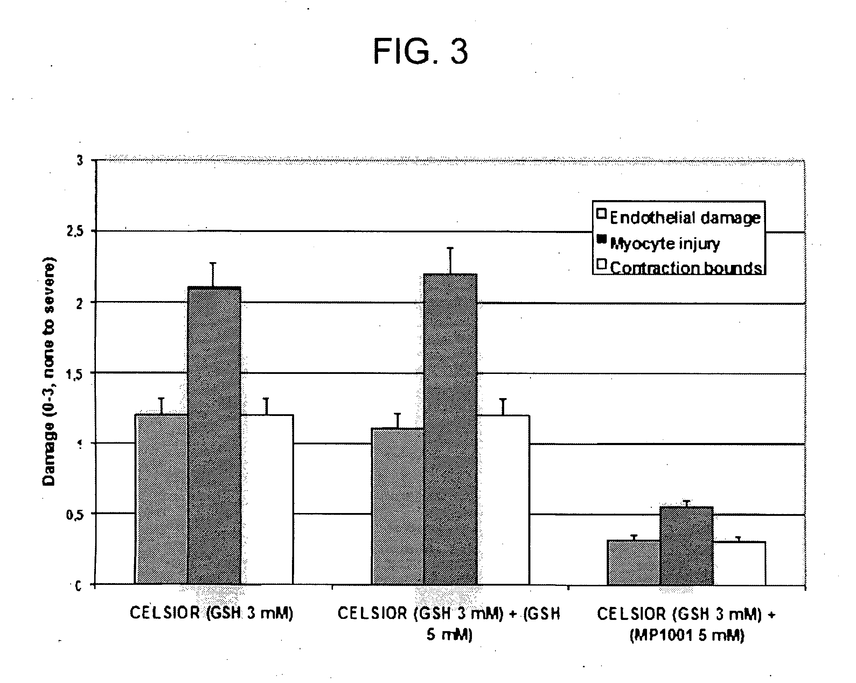

It is known that the disruption of the myocardial architecture indicate reperfusion damage. The hystopathological analysis of tissue graded for the degree of myocyte injury, edema, and endotelial damage was consistent with previous results showing the least amount of disruption of the myocardial architecture. The hystopathological analysis shows the protection of hearts stored in the presence of MP1001 as compared to GSH (Fig. 3). Hearts sustained less injury by all criteria examined.

These tests show that, according to the present invention, the presence of MP1001 in Celsior solution is able to drastically reduce the ischemic damage after reperfusion of stored heart compared to storage in standard Celsior solution. These data demonstrate the capacity of the compound of the invention to exert an exceptional protective effect of ischemic hearts thus improving the viability of cold-preserved organs.

## Claims

1. A method for preserving and/or enhancing the viability ex vivo of a mammalian biological system, comprising contacting said biological system with a preservation solution comprising a compound of formula: 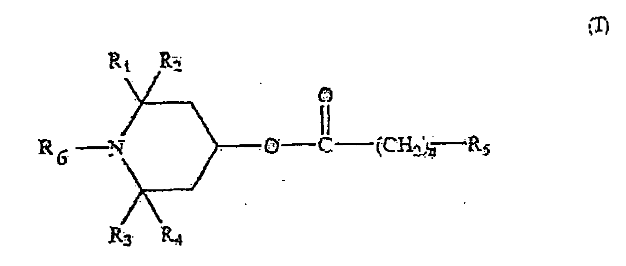 in which:
R₁, R₂, R₃ and R₄ are, independently of one another, alkyl having from 1 to 6 carbon atoms, R₆ is oxygen or hydroxyl, and R₅ is 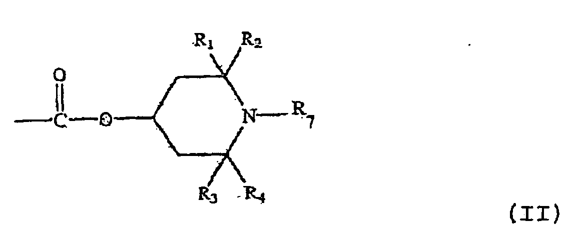
in which R₁, R₂, R₃ and R₄ are, independently of one another, alkyl having from 1 to 6 carbon atoms, R₇ is oxygen or hydroxyl, and n is a whole number from 2 to 14; or a physiologically acceptable salt of said compound.

2. A method according to Claim 1, in which R₁, R₂, R₃ and R₄ are, independently of one another, an alkyl having from 1 to 3 carbon atoms and R₅ is: 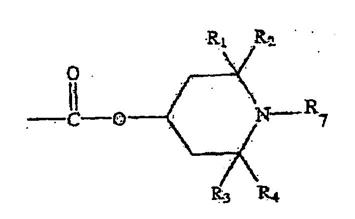 in which R₁, R₂, R₃ and R₄ are, independently of one another, an alkyl having from 1 to 3 carbon atoms, R₇ is oxygen or hydroxyl, and n is a whole number from 6 to 10.

3. A method according to any one of Claims 1 or 2, in which the compound is of formula 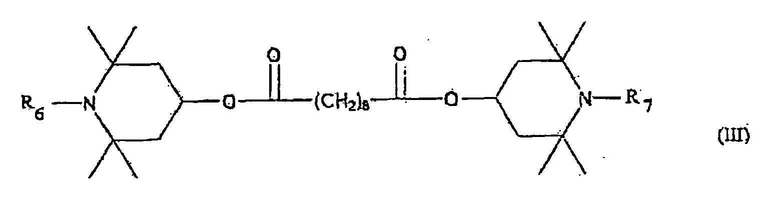 in which R₆ and R₇ are identical or different and are selected from oxygen and hydroxyl.

4. A method according to any of Claims 1 to 3, in which biological systems are selected from biotechnological preparations such as recombinant proteins, organs such as heart, liver, pancreas, kidney, lung, intestine, trachea as well as amputated organs such as digits, tissues such as skin/muscle flaps, whole blood, blood derivatives such as platelets and plasma, and cells such as red blood cells, pancreatic islet cells, stem cells and germ cells.

5. A method according to any of Claims 1 to 4, in which the compounds are under the form of physiologically acceptable salts preferably selected from the group consisting of chloride, fumarate and maleate.

6. A method according to any of the preceding Claims, in which said compound is present in the preservation solution in an antioxidant effective amount, preferably in the range of from 0.001 to 50 mM.

7. A method according to any of the previous Claims, wherein said compound is added to a standard commercially available preservation solution such as Celsior solution, University of Wisconsin solution (UW-1), Modified University of Wisconsin solution (UW-2), Krebs-Henseleit solution, St. Thomas 1 (STH-1) and 2 (STH-2) solution, Collins solution, Euro-Collins solution (EC), Lactated Ringer's solution, Columbia University solution, Stanford solution (STF), Lyon Preservation solution (LYPS), Bretschneider solution (HTK), RMBM solution, ET-Kioto solution, CMV-1 solution, Polysol solution, NaCl solution.

8. A method according to any of the preceding Claims, in which said compound is used in combination with desferoxamine preferably within the range of from 0.01 to 55 mM and, if not already present, Na⁺, preferably at the final concentration within the range of from 0.1 to 200 mM, and K⁺, preferably at the final concentration within the range of from 0.2 to 220 mM.

9. A method according to any of Claims 1 to 8, in which said compound is comprised in an isotonic aqueous buffer solution comprising desferoxamine, within the range of from 0,01 to 55mM, Na⁺, within the range of from 0.1 to 200 mM, and K⁺, within the range of from 0.2 to 220 mM.

10. A method according to any of the preceding Claims, wherein the biological system is contacted with the preservation solution by infusion, immersion, flushing, perfusion or culture.

11. An aqueous saline-based solution for the preservation of biological materials, particularly for storage, perfusion and reperfusion ex vivo of mammalian organs, comprising an effective antioxidant amount of a compound of formula (I) as defined in claim 1 or (III) , as defined in claim 3 or a physiological acceptable salt thereof and further comprising a preservative or antioxidant compound selected from the group of trolox derivatives of vitamin E (Trolox C), allopurinol, deferoxamine, indaindoles, catalase, peroxidase, superoxide dismutase, glutathione, N-acetylcysteine, nytroxides, ginkolides, coenzyme Q, β-carotene, cyanidol and mixtures thereof.

12. A solution according to Claim 11, comprising a physiologically acceptable amount of an ion selected from the group consisting of sodium, potassium, calcium, magnesium, mono- and bi-acidic phosphate, bicarbonate, chloride and mixtures thereof.

13. A solution according to any Claims 11 or 12, further comprising a carbohydrate source.

14. A solution according to any of Claims 11 to 13, having a pH of from 7.4 to 8.5.

15. A solution according to any of Claims 11 to 14, comprising desferoxamine, preferably in the concentration of from 0.01 to 55 mM.

16. A solution according to any of Claims 11 to 15, comprising sodium ions preferably from 0.1 to 200 mM and potassium ions preferably from 0.2 to 220 mM.

## Patentansprüche

1. Verfahren zur Konservierung und/oder Verbesserung der Lebensfähigkeit ex vivo von einem biologischen System eines Säugers, das ein Inkontaktbringen des biologischen Systems mit einer Konservierungslösung aufweist, die eine Verbindung der Formel: 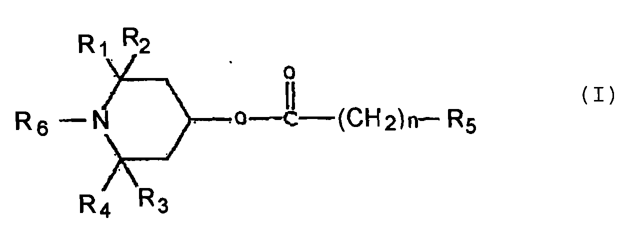 in der:
R₁, R₂, R₃ und R₄ unabhängig voneinander Alkyl mit 1 bis 6 Kohlenstoffatomen darstellen, R₆ Sauerstoff oder Hydroxyl ist und R₅ 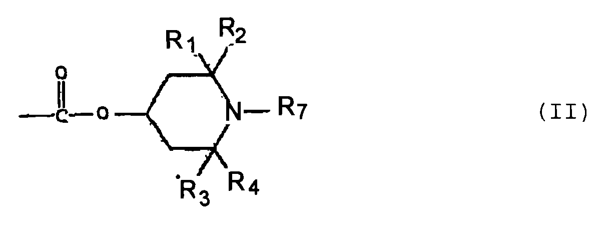
ist, worin R₁, R₂, R₃ und R₄ unabhängig voneinander Alkyl mit 1 bis 6 Kohlenstoffatomen darstellen, R₇ Sauerstoff oder Hydroxyl ist und n eine ganze Zahl von 2 bis 14 ist; oder ein physiologisch annehmbares Salz der Verbindung aufweist.

2. Verfahren nach Anspruch 1, in dem R₁, R₂, R₃ und R₄ unabhängig voneinander ein Alkyl mit 1 bis 3 Kohlenstoffatomen darstellen und R₅ ist: 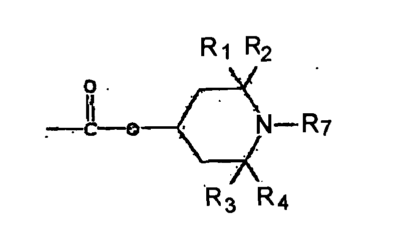 worin R₁, R₂, R₃ und R₄ unabhängig voneinander ein Alkyl mit 1 bis 3 Kohlenstoffatomen darstellen, R₇ Sauerstoff oder Hydroxyl ist und n eine ganze Zahl von 6 bis 10 ist.

3. Verfahren nach einem beliebigen der Ansprüche 1 oder 2, in dem die Verbindung die Formel 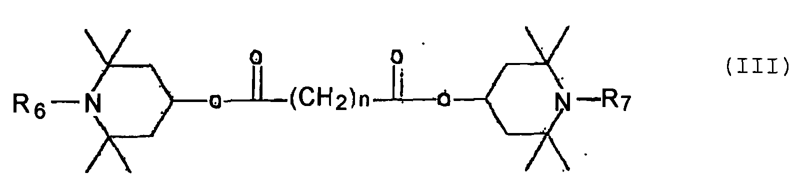 aufweist, in der R₆ und R₇ gleich oder verschieden sind und aus Sauerstoff und Hydroxyl ausgewählt sind.

4. Verfahren nach einem beliebigen der Ansprüche 1 bis 3, in dem die biologischen Systeme aus biotechnologischen Präparaten, wie beispielsweise rekombinanten Proteinen, Organen, wie beispielsweise Herz, Leber, Bauchspeicheldrüse, Niere, Lunge, Darm, Luftröhre, sowie amputierten Organen, wie beispielsweise Fingern/Zehen, Geweben, wie beispielsweise Haut/Muskellappen, Vollblut, Blutderivaten, wie beispielsweise Blutplättchen und Plasma, sowie Zellen, wie beispielsweise roten Blutzellen, pankreatischen Inselzellen, Stammzellen und Keimzellen, ausgewählt sind.

5. Verfahren nach einem beliebigen der Ansprüche 1 bis 4, in dem die Verbindungen in Form von physiologisch annehmbaren Salzen vorliegen, die vorzugsweise aus der Gruppe bestehend aus Chlorid, Fumarat und Maleat ausgewählt sind.

6. Verfahren nach einem beliebigen der vorhergehenden Ansprüche, in dem die Verbindung in der Konservierungslösung in einer als Antioxidans wirksamen Menge, vorzugsweise in dem Bereich von 0,001 bis 50 mM, vorliegt.

7. Verfahren nach einem beliebigen der vorhergehenden Ansprüche, wobei die Verbindung einer kommerziell erhältlichen Standardkonservierungslösung, wie beispielsweise Celsior-Lösung, University of Wisconsin-Lösung (UW-1), modifizierter University of Wisconsin-Lösung (UW-2), Krebs-Henseleit-Lösung, St. Thomas 1 (STH-1) und 2 (STH-2)-Lösung, Collins-Lösung, Euro-Collins-Lösung (EC), Ringer-Lactat-Lösung, Columbia University-Lösung, Stanford-Lösung (STF), Lyon-Konservierungslösung (LYPS), Bretschneider-Lösung (HTK), RMBM-Lösung, ET-Kyoto-Lösung, CMV-1-Lösung, Polysol-Lösung, NaCl-Lösung, zugegeben wird.

8. Verfahren nach einem beliebigen der vorhergehenden Ansprüche, in dem die Verbindung in Kombination mit Desferoxamin, vorzugsweise in dem Bereich von 0,01 bis 55 mM, und, sofern nicht bereits vorhanden, Na⁺, vorzugsweise in der Endkonzentration in dem Bereich von 0,1 bis 200 mM, und K⁺, vorzugsweise in der Endkonzentration in dem Bereich von 0,2 bis 220 mM, eingesetzt wird.

9. Verfahren nach einem beliebigen der Ansprüche 1 bis 8, in dem die Verbindung in einer isotonischen wässrigen Pufferlösung enthalten ist, die Desferoxamin in dem Bereich von 0,01 bis 55 mM, Na⁺ in dem Bereich von 0,1 bis 200 mM und K⁺ in dem Bereich von 0,2 bis 220 mM aufweist.

10. Verfahren nach einem beliebigen der vorhergehenden Ansprüche, worin das biologische System durch Infusion, Eintauchen, Spülen, Perfusion oder Kultivieren mit der Konservierungslösung in Kontakt gebracht wird.

11. Wässrige salinebasierte Lösung für die Konservierung biologischer Materialien, insbesondere zur Ex vivo Aufbewahrung, Perfusion und Reperfusion von Säugerorganen, aufweisend eine wirksame Antioxidansmenge einer Verbindung der Formel (I), wie in Anspruch 1 definiert, oder (III), wie in Anspruch 3 definiert, oder eines physiologisch annehmbaren Salzes davon und ferner aufweisend eine Konservierungs- oder Antioxidansverbindung, ausgewählt aus der Gruppe von Troloxderivaten von Vitamin E (Trolox C), Allopurinol, Deferoxamin, Indandiol, Katalase, Peroxidase, Superoxid-Dismutase, Glutathion, N-Acetylcystein, Nitroxiden, Ginkoliden, Coenzym Q, β-Carotin, Cianidanol und Mischungen davon.

12. Lösung nach Anspruch 11, die eine physiologisch annehmbare Menge eines Ions aufweist, das aus der Gruppe ausgewählt ist, bestehend aus Natrium, Kalium, Kalzium, Magnesium, mono- und bisaurem Phosphat, Bikarbonat, Chlorid und Mischungen davon.

13. Lösung nach einem beliebigen der Ansprüche 11 oder 12, die ferner eine Kohlenhydratquelle aufweist.

14. Lösung nach einem beliebigen der Ansprüche 11 bis 13, die einen pH-Wert von 7,4 bis 8,5 aufweist.

15. Lösung nach einem beliebigen der Ansprüche 11 bis 14, die Desferoxamin, vorzugsweise in der Konzentration von 0,01 bis 55 mM, aufweist.

16. Lösung nach einem beliebigen der Ansprüche 11 bis 15, die Natriumionen, vorzugsweise 0,1 bis 200 mM, und Kaliumionen, vorzugsweise 0,2 bis 220 mM, aufweist.

## Revendications

1. Procédé pour conserver et/ou renforcer la viabilité ex vivo d'un système biologique de mammifère, comprenant la mise en contact dudit système biologique avec un solution de conservation comprenant un composé de formule: 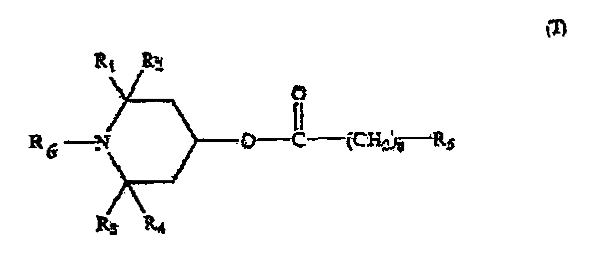 dans laquelle:
R₁, R₂, R₃ et R₄ sont, indépendamment les uns des autres, un alkyle comportant de 1 à 6 atomes de carbone, R₆ est un oxygène ou un hydroxyle, et R₅ est 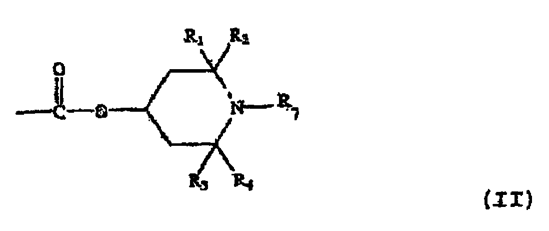
dans laquelle R₁, R₂, R₃ et R₄ sont, indépendamment les uns des autres, un alkyle comportant de 1 à 6 atomes de carbone, R₇ est un oxygène ou un hydroxyle, et n est un nombre entier de 2 à 14 ; ou un sel physiologiquement acceptable dudit composé.

2. Procédé selon la revendication 1, dans lequel R₁, R₂, R₃ et R₄ sont, indépendamment les uns des autres, un alkyle comportant de 1 à 3 atomes de carbone, et R₅ est 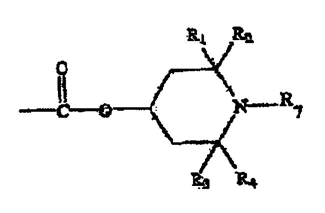 dans laquelle R₁, R₂, R₃ et R₄ sont, indépendamment les uns des autres, un alkyle comportant de 1 à 3 atomes de carbone, R₇ est un oxygène ou un hydroxyle, et n est un nombre entier de 6 à 10.

3. Procédé selon l'une quelconque des revendications 1 ou 2, dans lequel le composé a pour formule 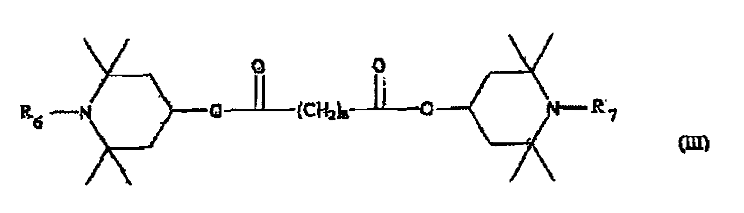 dans laquelle R₆ et R₇ sont identiques ou différents et sont choisis parmi un oxygène et un hydroxyle.

4. Procédé selon l'une quelconque des revendications 1 à 3, dans lequel les systèmes biologiques sont choisis parmi des préparations biotechnologiques telles que des protéines recombinantes, des organes tels que le coeur, le foie, le pancréas, le rein, le poumon, l'intestin, la trachée ainsi que des organes amputés tels que des doigts, des tissus tels que des lambeaux cutanés/musculaires, le sang entier, des dérivés de sang tels que des plaquettes et le plasma, et des cellules telles que des globules rouges, des cellules des îlots de Langerhans, des cellules souches et des cellules germinales.

5. Procédé selon l'une quelconque des revendications 1 à 4, dans lequel les composés se présentent sous la forme de sels physiologiquement acceptables choisis dans le groupe constitué par le chlorure, le fumarate et le maléate.

6. Procédé selon l'une quelconque des revendications précédentes, dans lequel ledit composé est présent dans la solution de conservation dans une quantité oxydante efficace, de préférence dans la plage de 0,001 à 50 mM.

7. Procédé selon l'une quelconque des revendications précédentes, dans lequel ledit composé est ajouté à une solution de conservation disponible dans le commerce standard telle qu'une solution Celsior, solution de l'Université de Wisconsin (UW-1), solution de l'Université de Wisconsin modifiée (UW-2), solution de Krebs-Henseleit, solution de St. Thomas 1 (STH-1) et 2 (STH-2), solution de Collins, solution d'Euro-Collins (EC), solution de lactate de Ringer, solution de l'Université de Columbia, solution de Stanford (STF), solution de conservation de Lyon (LYPS), solution de Bretschneider (HTK), solution RMBM, solution ET-Kioto, solution CMV-1, solution Polysol et solution de NaCl.

8. Procédé selon l'une quelconque des revendications précédentes, dans lequel ledit composé est utilisé en combinaison avec de la desféroxamine de préférence dans la plage de 0,01 à 55 mM et, s'ils ne sont pas déjà présents, du Na⁺, de préférence à la concentration finale dans la plage de 0,1 à 200 mM, et du K⁺, de préférence à la concentration finale dans la plage de 0,2 à 220 mM.

9. Procédé selon l'une quelconque des revendications 1 à 8, dans lequel ledit composé est compris dans une solution tampon aqueuse isotonique comprenant de la desféroxamine, dans la plage de 0,01 à 55 mM, du Na⁺, dans la plage de 0,1 à 200 mM, et du K⁺, dans la plage de 0,2 à 220 mM.

10. Procédé selon l'une quelconque des revendications précédentes, dans lequel le système biologique est mis en contact avec la solution de conservation par infusion, immersion, rinçage, perfusion ou culture.

11. Solution aqueuse à base saline destinée à la conservation de matières biologiques, en particulier pour le stockage, la perfusion et la reperfusion ex vivo d'organes de mammifère, comprenant une quantité antioxydante efficace d'un composé de formule (I) telle que définie dans la revendication 1 ou (III) telle que définie dans la revendication 3, ou d'un sel physiologiquement acceptable de ceux-ci et comprenant en outre un composé conservateur ou antioxydant choisi dans le groupe des dérivés trolox de la vitamine E (Trolox C), l'allopurinol, la déféroxamine, les indaindoles, la catalase, la peroxydase, la superoxyde dismutase, la glutathione, la N-acétylcystéine, les nitroxydes, les ginkgolides, la coenzyme Q, le β-carotène, le cyanidol et leurs mélanges.

12. Solution selon la revendication 11, comprenant une quantité physiologiquement acceptable d'un ion choisi dans le groupe constitué par le sodium, le potassium, le calcium, le magnésium, le phosphate mono- et biacide, le bicarbonate, le chlorure et leurs mélanges.

13. Solution selon l'une quelconque des revendications 11 ou 12, comprenant en outre une source de glucide.

14. Solution selon l'une quelconque des revendications 11 à 13, ayant un pH de 7,4 à 8,5.

15. Solution selon l'une quelconque des revendications 11 à 14, comprenant de la desféroxamine, de préférence à une concentration de 0,01 à 55 mM.

16. Solution selon l'une quelconque des revendications 11 à 15, comprenant des ions sodium, de préférence de 0,1 à 200 mM, et des ions potassium, de préférence de 0,2 à 220 mM.
